(19)

Europäisches Patentamt

European Patent Office

Office européen des brevets

(11) **EP 4 299 655 A1**

(12) **EUROPEAN PATENT APPLICATION**
published in accordance with Art. 153(4) EPC

(43) Date of publication:
**03.01.2024 Bulletin 2024/01**

(21) Application number: **22759475.1**

(22) Date of filing: **17.02.2022**

(51) International Patent Classification (IPC):
**C08J 5/18** (2006.01)

(52) Cooperative Patent Classification (CPC):
**C08J 5/18**

(86) International application number:
**PCT/JP2022/006370**

(87) International publication number:
**WO 2022/181436 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.02.2021 JP 2021027825**

(71) Applicant: **TOYOBO CO., LTD.**
**Osaka-shi**
**Osaka 5300001 (JP)**

(72) Inventors:
• **INOUE, Masafumi**
  **Tsuruga-shi, Fukui 914-8550 (JP)**
• **HARUTA, Masayuki**
  **Tsuruga-shi, Fukui 914-8550 (JP)**

(74) Representative: **Vossius & Partner**
**Patentanwälte Rechtsanwälte mbB**
**Siebertstraße 3**
**81675 München (DE)**

(54) **HEAT-SHRINKABLE POLYESTER FILM**

(57)    The present invention aims to provide a heat-shrinkable polyester film that contains a PET bottle recycled raw material but that has sufficient shrinkability, a low shrinkage stress, and a high solvent adhesion strength. The present invention provides a heat shrinkable polyester film, wherein a polyester of the polyester film contains recycled raw material from a PET bottle and an acid component of the polyester comprises isophthalic acid, and the film satisfies a shrinkage rate in a main shrinkage direction, a maximum shrinkage stress in the main shrinkage direction, a melting heat amount, a solvent adhesion strength, and a limiting viscosity.

**Description**

TECHNICAL FIELD

The present invention relates to a heat-shrinkable polyester film that has high shrinkability, a low shrinkage stress, and excellent solvent adhesiveness, while using a PET bottle recycled raw material, with reduced occurrence of defects such as insufficient shrinkage, uneven shrinkage distortion, and uneven shrinkage in lengthwise direction during use.

BACKGROUND ART

In recent years, stretched films (so-called heat-shrinkable films) made of polyvinyl chloride-based resins, polystyrene-based resins, polyester-based resins, and the like have been widely used for label packaging, cap sealing, accumulation packaging, etc., which double to protect glass bottles, PET bottles, and the like and to display products. Among such heat-shrinkable films, polyvinyl chloride-based films have low heat resistance, and have problems such as generating hydrogen chloride gas and causing dioxins when incinerated. In addition, polystyrene-based films have poor solvent resistance, require the use of special composition inks for printing, and need to be incinerated at high temperatures, causing a problem that a large amount of black smoke is generated with an offensive odor during incineration. Therefore, polyester-based heat-shrinkable films, which have high heat resistance, are easily incinerated, and have excellent solvent resistance, have been widely used as shrinkable labels, and the use amount thereof tends to increase as the distribution amount of PET containers (PET bottles) increases.

Meanwhile, the usage amount of PET bottles has remarkably increased, so that garbage problems and resource conservation have been a social challenge. As one of the measures therefor, there has been a growing trend to collect and reuse (recycle) used PET bottles as a resource.

Examples of recycling technology mainly include mechanical recycling, chemical recycling, and thermal recycling. Among these, the mechanical recycling has been most widely spread, and used containers are sorted, crushed, washed, and formed again into resin chips with an extruder, and then processed into PET bottles, fibers, or films to be used again.

The PET bottle recycled raw material as described above is also partially used for a heat-shrinkable polyester film label, leading to contribution to a life cycle of PET including production, use, and disposal, and to reduction of environmental burden.

A molecular structure that controls a shrinkage behavior of a film has not been revealed yet in detail with regard to many aspects, but oriented amorphous molecules are considered to be related to shrinkage characteristics. Molecular chains are not oriented in a state (random coil state) of a melt-molded unstretched film, and such molecular chains are arranged and oriented mainly in a stretching direction by stretching. It is considered that a part of oriented amorphous molecular chains becomes mobile when heat is applied at a glass transition temperature or higher, and then tends to return to an original random coil state, so that the entire film is shrunk.

Specifically, polyester forming a heat-shrinkable polyester film needs to have high amorphous property, in other words, to have low crystallinity. It is known that oriented crystallization occurs due to stretching if crystallinity is high. However, crystallized molecular chains do not become mobile even if heat is applied, so that heat shrinkage is hindered.

On the other hand, most parts of a container are desired to be covered with a label to protect contents therein and improve the design thereof. In addition, container shapes are diversified for each company, for improvement in the design and differentiation. Thus, a heat-shrinkable film to be used for the label needs to have a high shrinkage rate.

However, a polyester raw material to be used for beverage bottles is a raw material having high crystallinity for securing thermal stability of containers. A PET bottle recycled raw material is also a crystalline raw material, and a problem arises that, when the PET bottle recycled raw material is used for a heat-shrinkable film, the crystallinity thereof makes it difficult to achieve a high shrinkage rate.

In general, heat-shrinkable polyester films that shrink largely in a width direction thereof have been widely used. Such a film is stretched by a tenter stretching method or the like to produce a wide master roll, and the master roll is then wound into a roll having any winding length while the master roll is slit at any width, to obtain a film roll product. Then, for the purpose of providing the film with a design property or indicating a product, the film in a roll form is subjected to a printing step. After printing, the film is slit again at a necessary width, is wound into a roll, then is formed into a tubular bag through a center-sealing step with solvent adhesion, and is wound into a roll (becomes a roll for labels).

The label formed into a tubular bag and wound is cut into a necessary length while being wound off from the roll, to become labels each having an annular shape. The annular labels are fitted to objects to be packaged by a method such as covering by hand, and pass through a steam tunnel, a hot air tunnel, or the like to be shrunk, whereby the labels are obtained.

When a heat-shrinkable polyester film receives an excessively high shrinkage stress during shrinkage, the shrinkage causes peeling at an adhesion portion of the above-described tube, and thus the appearance is significantly deteriorated and a function for protecting an object to be packaged may also be impaired. Furthermore, when a solvent adhesion strength of a center seal is low, the shrinkage similarly causes peeling at the adhesion portion. The peeling at the adhesion portion is considered to be caused by the adhesion strength being weaker than the shrinkage stress, and it is ideal that the shrinkage stress is low and the solvent adhesion strength is high.

When a raw material forming a heat-shrinkable polyester film has high crystallinity, the oriented crystallization due to stretching increases a stretching stress, resulting in a high shrinkage stress. When a film has high crystallinity, polymer molecular chains are less likely to be swollen by a solvent and the solvent adhesion strength decreases.

The crystallinity increased by blending a PET bottle recycled raw material becomes a factor that hinders a low shrinkage stress and strong adhesion.

Patent Literature 1 discloses a method for decreasing crystallinity of a raw material by adding an amorphous copolymerization component to a PET bottle recycled raw material. However, Patent Literature 1 does not show a specific index for crystallinity. In addition, the present inventors found that, when two or more kinds of raw materials are dryblended and put into an extruder, the two or more kinds of raw materials do not come into a random copolymerization state and crystallinity thereof does not decrease to a sufficient extent, necessary shrinkability cannot be obtained when the raw materials are formed into a heat-shrinkable film, and the film has a high shrinkage stress and low solvent adhesion, in some cases.

CITATION LIST

[PATENT LITERATURE]

[PTL 1] Japanese Patent No. 5320737

SUMMARY OF THE INVENTION

PROBLEMS TO BE SOLVED BY THE INVENTION

An object of the present invention is to provide a heat-shrinkable polyester film that contains a PET bottle recycled raw material but that has sufficient shrinkability, a low shrinkage stress, and a high solvent adhesion strength.

SOLUTION TO THE PROBLEMS

The inventors have completed the present invention as a result of the studies in order to solve above described problem. The present invention is consisted of the followings.

1. A heat-shrinkable polyester film, wherein
a polyester of the polyester film contains 5 mass% or more and 50 mass% or less of recycled raw material from a PET bottle and an acid component of the polyester comprises isophthalic acid, and the film satisfies the following requirements (1) to (5):

(1) a shrinkage rate in a main shrinkage direction of the film is 50% or higher when the film is immersed in 98°C hot water for 10 seconds;
(2) a maximum shrinkage stress in the main shrinkage direction of the film is 3 MPa or higher and 15 MPa or lower when measured in 90°C hot air;
(3) a melting heat amount $\Delta Hm$ of a sample obtained by once melting and then rapidly cooling the film as measured by using a differential scanning calorimeter (DSC) is 0 J/g or more and 32 J/g or smaller;
(4) a solvent adhesion strength of the film is 2.9 N/15 mm or higher when 1,3-dioxolane is used as an adhesive solvent; and
(5) a limiting viscosity of the film is 0.59 dl/g or more and 0.75 dl/g or smaller.

2. The heat-shrinkable polyester film according to above 1, wherein
the film has a change amount $\Delta Cp$ between specific heat capacities before and after a glass transition is 0.20 J/(g·°C) or more and 0.35 J/(g·°C) or smaller when a reversing heat flow measurement with a temperature-modulated DSC is performed on a sample obtained by once melting and then rapidly cooling the film.

3. The heat-shrinkable polyester film according to above 1 or 2, wherein
the film has a tensile elongation at break in a direction orthogonal to the main shrinkage direction of the heat-shrinkable polyester film of 40% or higher.

4. The heat-shrinkable polyester film according to any one of above 1 to 3, wherein
a content ratio of the isophthalic acid in 100 mol% of the entire acid component in polyester forming the film is 0.1 mol% or more and 3.0 mol% or smaller.
5. The heat-shrinkable polyester film according to any one of above 1 to 4, wherein
the polyester forming the heat-shrinkable polyester film comprises ethylene terephthalate as a main constituent component.
6. A heat-shrinkable label, comprising the heat-shrinkable polyester film according to any one of above 1 to 5.
7. A package, wherein at least a part of an outer periphery of an object to be packaged is covered by the heat-shrinking the label according to above 6.

DESCRIPTION OF EMBODIMENTS

A heat-shrinkable polyester film of the present invention is characterized in that: a polyester of the polyester film contains 5 mass% or more and 50 mass% or less of recycled raw material from a PET bottle and an acid component of the polyester comprises isophthalic acid and satisfies the following requirements (1) to (5).

(1) a shrinkage rate in a main shrinkage direction of a film is 50% or higher when the film is immersed in 98°C hot water for 10 seconds;
(2) a maximum shrinkage stress in the main shrinkage direction of the film is 3 MPa or higher and 15 MPa or lower when measured in 90°C hot air;
(3) a melting heat amount $\Delta Hm$ of a sample obtained by once melting and then rapidly cooling the film as measured by using a differential scanning calorimeter (DSC) is 0 J/g or more and 32 J/g or smaller;
(4) a solvent adhesion strength of the film is 2.9 N/15 mm or higher when 1,3-dioxolane is used as an adhesive solvent; and
(5) a limiting viscosity of the film is 0.59 dl/g or more and 0.75 dl/g or smaller.

Polyester forming the heat-shrinkable polyester film of the present invention contains ethylene terephthalate as a main component. Specifically, the polyester contains 50 mol% or more and preferably 60 mol% or more of ethylene terephthalate, with respect to 100 mol% of all the constituent components of the polyester. Examples of a dicarboxylic acid component, other than terephthalic acid and isophthalic acid, forming the polyester of the present invention include: aromatic dicarboxylic acid such as naphthalene dicarboxylic acid and orthophthalic acid; aliphatic dicarboxylic acid such as adipic acid, azelaic acid, sebacic acid, and decane dicarboxylic acid; and alicyclic dicarboxylic acid.
When aliphatic dicarboxylic acid (e.g., adipic acid, sebacic acid, decane dicarboxylic acid, etc.) is contained, the content thereof is preferably smaller than 3 mol%. With a heat-shrinkable polyester film obtained by using polyester containing 3 mol% or more of such aliphatic dicarboxylic acid, the film stiffness is insufficient, and a slit is generated or a malfunction occurs in a succeeding process step, so that such a content is not preferable.
In addition, preferably, trivalent or higher polyvalent carboxylic acid (e.g., trimellitic acid, pyromellitic acid, anhydrides thereof, and the like) is not contained. With a heat-shrinkable polyester film obtained by using polyester containing such polyvalent carboxylic acid, a necessary high shrinkage rate is difficult to be achieved.
Examples of a diol component, other than ethylene glycol, forming the polyester used in the present invention include: aliphatic diols such as 1,3-propanediol, 1,4-butanediol, neopentyl glycol, and hexanediol; alicyclic diols such as 1,4-cyclohexanedimethanol and diethylene glycol; and aromatic diols such as bisphenol A.
Preferably, polyester to be used for the heat-shrinkable polyester film of the present invention contains one or more of cyclic diols such as 1,4-cyclohexanedimethanol, and diols each having 3 to 6 carbon atoms (e.g., 1,3-propanediol, 1,4-butanediol, neopentyl glycol, hexanediol, diethylene glycol, etc.), and has a glass transition point (Tg) adjusted to be 60 to 80°C.
In polyester to be used for the heat-shrinkable polyester film of the present invention, the total amount of one or more kinds of monomer components that can become amorphous components, in 100 mol% of a polyhydric alcohol component or 100 mol% of a polyvalent carboxylic acid component in the entire polyester resin is preferably 8 mol% or more, more preferably 10 mol% or more, and particularly preferably 13 mol% or more. In addition, the total amount of one or more kinds of monomer components that can become amorphous components is preferably 45 mol% or smaller, more preferably 40 mol% or smaller, and particularly preferably 35 mol% or smaller. Here, examples of the monomer that can become an amorphous component include neopentyl glycol, 1,4-cyclohexanedimethanol, diethylene glycol, isophthalic acid, 1,4-cyclohexanedicarboxylic acid, 2,6-naphthalene dicarboxylic acid, 2,2-diethyl 1,3-propanediol, 2-n-butyl 2-ethyl 1,3-propanediol, 2,2-isopropyl 1,3-propanediol, 2,2-di-n-butyl 1,3-propanediol, 1,4-butanediol, and hexanediol, and among these, neopentyl glycol, diethylene glycol, 1,4-cyclohexanedimethanol, or isophthalic acid is preferably used.
Preferably, polyester to be used for the heat-shrinkable polyester film of the present invention does not contain diol having 8 or more carbon atoms (e.g., octanediol, etc.), or trihydric or higher polyhydric alcohol (e.g., trimethylolpropane, trimethylolethane, glycerin, diglycerin, etc.). With a heat-shrinkable polyester film obtained by using polyester containing the above diol or polyhydric alcohol, a necessary high shrinkage rate is difficult to be achieved.

To resin forming the heat-shrinkable polyester film of the present invention, various additives, for example, waxes, antioxidants, antistatic agents, crystal nucleating agents, viscosity reducers, heat stabilizers, pigments for coloring, anti-coloring agents, UV absorbers, etc. can be added as necessary. A polyethylene terephthalate-based resin film is preferably made to have good workability (slipperiness) by adding fine particles as a lubricant to the resin forming the heat-shrinkable polyester film of the present invention. As fine particles, any fine particles may be selected, and examples of an inorganic fine particle include silica, alumina, titanium dioxide, calcium carbonate, kaolin, and barium sulfate. Examples of an organic fine particle include acrylic-based resin particles, melamine resin particles, silicone resin particles, and cross-linked polystyrene particles. The average particle diameter of the fine particles can be appropriately selected in a range of 0.05 to 3.0 $\mu$m (when measured with a Coulter counter) as necessary. Moreover, when an addition amount of the fine particles is in a range of 300 to 1200 ppm in the film, both good slipperiness (friction) and transparency can be achieved.

As a method for blending the above particles into resin forming the heat-shrinkable polyester film, for example, the particles can be added at any stage in the production of the polyester-based resin. However, the fine particles are preferably added as a slurry obtained by dispersing the fine particles in ethylene glycol or the like, at the stage of esterification or at the stage after the end of a transesterification reaction and before the start of a polycondensation reaction, and the polycondensation reaction is caused to progress. In addition, the fine particles are also preferably blended by a method in which a slurry of the particles dispersed in ethylene glycol, water, or the like and a polyester-based resin raw material are blended using a kneading extruder equipped with a vent, a method in which dried particles and a polyester-based resin raw material are blended using the kneading extruder, or the like.

Furthermore, it is also possible to perform a corona treatment, a coating treatment, a flame treatment, or the like on the heat-shrinkable polyester film of the present invention for allowing the film surface to have good adhesiveness.

The heat-shrinkable polyester film of the present invention contains 5% by mass or more to 50% by mass of a PET bottle recycled raw material. Polyester to be used for PET bottles contains several percent of isophthalic acid as a dicarboxylic acid component, in order to obtain good moldability, whereas the other component is terephthalic acid, and most of a diol component is an ethylene glycol component in many cases. In other words, the polyester is made of a crystalline raw material, and the recycled raw material (PET bottle recycled raw material) thereof is also crystalline.

As a method for decreasing the crystallinity of polyester that contains a PET bottle recycled raw material and forms the heat-shrinkable polyester film, a method in which a polyester raw material having a high amorphous property is blended, is used. The raw material having a high amorphous property means a raw material having a monomer component that can become an amorphous component as described above. By blending the PET bottle recycled raw material and the raw material having a high amorphous property, an amount of the monomer component is adjusted so as to form a preferable amorphous component as described above.

The content of the PET bottle recycled raw material is preferably in a range of 5% by mass or more to 50% by mass. If the content is smaller than 5% by mass, a contribution to reduction of environmental burden is extremely small. If the content of the PET bottle recycled raw material to be used is more than 50% by mass, it is necessary to largely increase an amorphous property of the raw material other than the PET bottle recycled raw material, leading to a prolonged polymerization time for the raw material, for example. Thus, it is not economical and not preferred. The heat-shrinkable polyester film of the present invention may have a single-layer configuration or laminate configuration having two or more layers, and preferably contains the PET bottle recycled raw material in the above range of the content in each layer forming the film.

When a sample obtained by once melting and then rapidly cooling the heat-shrinkable polyester film of the present invention is measured with a differential scanning calorimeter (DSC), a fusion enthalpy ($\Delta$Hm) thereof needs to be 0 J/g or more and 32 J/g or smaller. The fusion enthalpy ($\Delta$Hm) is an index indicating the degree of the crystallinity of the entire polyester forming the heat-shrinkable polyester film of the present invention. The fusion enthalpy is an enthalpy obtained when a crystalline component that has been thermally crystallized by heating with the DSC device melts. It can be considered that a large value indicates that an amount of crystallizable components is large, and stretching crystallization or crystallization through heat treatment during film formation is likely to occur. When the fusion enthalpy is small, an amorphous property is high, and a high shrinkage rate is easily obtained, the shrinkage stress decreases, and the solvent adhesion strength is increased in the heat-shrinkable polyester film, which is preferable. When the fusion enthalpy is more than 32 J/g, the crystallinity is excessively high. Thus, stretching crystallization or crystallization through heat treatment is likely to occur, sufficient shrinkability cannot be obtained, the stretching stress is increased, the shrinkage stress is increased, and the solvent adhesion strength decreases. A smaller fusion enthalpy is more preferable, and a lower limit thereof is 0 J/g (no melting peak).

The range of the fusion enthalpy is more preferably 0 J/g or more and 30 J/g or smaller, the range thereof is even more preferably 0 J/g or more and 27 J/g or smaller, and the range thereof is particularly preferably 0 J/g or more and 24 J/g or smaller.

Mixing the polyester raw material having a high amorphous property with a crystalline PET bottle recycled raw material to decrease the crystallinity means decreasing the fusion enthalpy (ΔHm).

In general, in a homopolymer, increase of copolymerization components leads to decrease of stereoregularity, thereby decreasing crystallinity. Such an effect is enhanced when monomer components of the polyester come into a random copolymerization state through transesterification. When the copolymerization components are simply increased to decrease crystallinity, sufficient solvent adhesion strength may not be obtained if randomization for the random copolymerization state does not sufficiently progress.

In the present invention, a raw material having a high amorphous property is dryblended with the crystalline raw material (PET bottle recycled raw material), and transesterification thereof is caused to progress while melt extrusion is performed with an extruder. If the transesterification reaction is insufficient, a crystalline component remains and the fusion enthalpy becomes high.

A method for promoting transesterification in the extruder will be described below.

When treatment of the heat-shrinkable polyester film of the present invention is performed in 98°C hot water for 10 seconds in an unloaded state, the heat shrinkage rate (i.e., hot water heat shrinkage rate at 98°C), in the main shrinkage direction of the film, which is calculated by the following formula 1 from the lengths before and after shrinkage, is preferably 50% or higher.

$$\text{Heat shrinkage rate} = \{(\text{length before shrinkage} - \text{length after shrinkage}) / \text{length before shrinkage}\} \times 100\ (\%) \cdots \text{formula 1}$$

When the hot water shrinkage rate at 98°C is lower than 50%, a shrinkage amount is small and thus wrinkles or insufficient shrinkage occurs in a label after heat shrinkage, so that such a heat shrinkable film is not preferable. An upper limit of the shrinkage rate is, but is not particularly limited to, about 80%.

A maximum shrinkage stress, in the main shrinkage direction, of the heat-shrinkable polyester film of the present invention is preferably 3 MPa or higher and 15 MPa or lower when measured in 90°C hot air. Measurement of a shrinkage stress is performed by a method described in EXAMPLES. When the maximum shrinkage stress at 90°C in the main shrinkage direction is higher than 15 MPa, a portion of the label at which label ends are adhered to each other is raised or peeled during shrinkage, or a sink mark is generated in a non-shrink direction, thereby deteriorating the appearance. Thus, such a maximum shrinkage stress is not preferable. When the maximum shrinkage stress is lower than 3 MPa, a label may become loose and may not adhere to a container when used as a label of the container, so that such a maximum shrinkage stress is not preferable.

A shrinkage stress is considered to be a residual of a force applied to the film during stretching, and correlates with a stretching stress. When a raw material has high crystallinity, oriented crystallization is likely to occur due to stretching. Each time a stretching strain is increased, a stretching stress is significantly increased. It is considered that, when crystallinity is reduced, crystallization due to stretching is inhibited, the stretching stress decreases, and the shrinkage stress of a film also decreases.

A range of a shrinkage stress is more preferably 4 MPa or higher and 14 MPa or lower, and the range thereof is even more preferably 5 MPa or higher and 13 MPa or lower.

The heat-shrinkable polyester film of the present invention preferably has a solvent adhesion strength of 2.9 (N/15 mm) or higher when 1,3-dioxolane is used as an adhesive solvent. If the solvent adhesion strength is lower than 2.9 (N/15 mm), a solvent adhesion portion is easily peeled by a shrinkage force when a label is heat-shrunk, so that such a solvent adhesion strength is not preferable. The solvent adhesion strength is more preferably 3.0 (N/15 mm) or higher, particularly preferably 4.0 (N/15 mm) or higher, and most preferably 6.0 (N/15 mm) or higher.

It is considered that a solvent causes polymer chains on film surfaces to swell, so that the mobility of the molecular chains is increased and the polymer chains on the surfaces are entangled, and thus solvent adhesion occurs. It is assumed that, when the film has high crystallinity, polymer chains thereof are densely packed, solvent molecules are less likely to enter gaps between the molecular chains, and thus the polymer chains are less likely to swell. Thus, the polymer chains on the film surfaces are less likely to be entangled and the adhesion strength thereof becomes low. Conversely, when the film has a high amorphous property and is in a random copolymerization state, a solvent is likely to cause the molecular chains to swell and be entangled, and the solvent adhesion strength thereof is increased.

A higher solvent adhesion strength is more preferable, but an upper limit of the solvent adhesion strength is considered to be about 15.0 (N/15 mm). If the solvent adhesion strength is excessively high, when two films are subjected to solvent adhesion to each other to form a label, the films are likely to be unnecessarily y adhered, so that productivity of labels may decrease. Thus, the solvent adhesion strength of 10.0 (N/15 mm) or lower is acceptable in practice.

A limiting viscosity of the film is preferably 0.59 dl/g or larger and 0.75 dl/g or smaller. When the limiting viscosity is smaller than 0.59 dl/g, the strength of the film decreases and breakage is likely to occur during film formation. In addition, an elongation at break in the longitudinal direction of the obtained film decreases and trouble with breakage is likely to be caused in a succeeding process step such as printing, so that such a limiting viscosity is not preferable. When the limiting viscosity is larger than 0.75 dl/g, a pressure during extrusion is excessively high and thus facilities easily malfunction, so that such a limiting viscosity is not preferable. The limiting viscosity is more preferably 0.60 dl/g or larger and 0.75 dl/g or smaller, and even more preferably 0.61 dl/g or larger and 0.73 dl/g or smaller.

When a reversing heat flow measurement with a temperature-modulated DSC is performed on a sample obtained by once melting and then rapidly cooling the heat-shrinkable polyester film of the present invention, a change amount $\Delta Cp$ between specific heat capacities before and after a glass transition is 0.20 J/(g·°C) or more and 0.35 J/(g·°C) or smaller. Polyester is classified into a crystalline phase and an amorphous phase, and the amorphous phase is further classified into a rigid amorphous phase and a mobile amorphous phase. It is considered that the mobile amorphous phase is a phase in which molecular motion is increased at or around a glass transition temperature, and contributes to shrinkage of the heat-shrinkable polyester film. On the other hand, the rigid amorphous phase is an amorphous phase in which molecular motion is constrained even at a glass transition. The above change amount $\Delta Cp$ of specific heat capacity corresponds to a mobile amorphous content. Specifically, it is considered that the larger the amount $\Delta Cp$ is, the larger the mobile amorphous content contributing to shrinkage is, and the heat shrinkage rate of the film becomes high. When the change amount $\Delta Cp$ of specific heat capacity is smaller than 0.2 J/(g·°C), a necessary shrinkage rate cannot be obtained, so that such $\Delta Cp$ is not preferable. The amount $\Delta Cp$ is more preferably 0.22 J/(g·°C) or larger, and even more preferably 0.24 or larger. Although the amount $\Delta Cp$ may be 0.35 or larger, an upper limit thereof is about 0.35 J/(g·°C) at most because the contained PET bottle recycled raw material is crystalline. A random copolymerization state is one factor for increasing the mobile amorphous content.

In polyester forming the heat-shrinkable polyester film of the present invention, the content ratio of isophthalic acid in 100 mol% of the entire acid component is 0.1 mol% or more and 3.0 mol% or smaller. For polyester used for PET bottles, the crystallinity is controlled such that the bottles have good appearance. As a result, polyester containing 6 mol% or smaller of isophthalic acid is used in general. In the present invention, 50% by mass or smaller of a PET bottle recycled raw material is contained, and thus an upper limit of the content ratio of the isophthalic acid is preferably 3.0 mol% or smaller, more preferably 2.0 mol% or smaller, and even more preferably 1.0 mol% or smaller.

A lower limit of the content ratio of the isophthalic acid is preferably 0.1 mol%, more preferably 0.3 mol%, and even more preferably 0.6 mol%. The content ratio of the isophthalic acid is measured and calculated by NMR measurement, as described below.

A tensile elongation at break in a direction orthogonal to the main shrinkage direction of the heat-shrinkable polyester film of the present invention is 40% or higher. If the elongation at break is lower than 40%, the risk of breakage is increased by a tensile force in the longitudinal direction in the succeeding process step such as printing or label formation, so that such an elongation at break is not preferable. The elongation at break is more preferably 50% or higher, even more preferably 60% or higher, particularly preferably 100% or higher, and most preferably 300% or higher. Although a higher elongation at break is more preferable, an upper limit thereof is 900% at most.

The thickness of a film is preferably 5 μm or larger and 40 μm or smaller. If the thickness is smaller than 5 μm, the risk of breakage in film formation is increased. In addition, the stiffness decreases and wrinkles are likely to occur when a label is formed, so that such thickness is not preferable. The larger the film thickness is, the more stable the film formation is, and the stiffness is enhanced, and thus troubles such as wrinkles are likely to be reduced. However, a large film thickness is retrograde from the viewpoint of the film of the present invention directed to reduce environmental response and volume reduction, so that such film thickness is not preferable. The film thickness is more preferably 8 μm or larger and 37 μm or smaller, and even more preferably 11 μm or larger and 34 μm or smaller.

Hereinafter, a preferable method for producing the heat-shrinkable polyester film of the present invention will be described.

The production process of the heat-shrinkable polyester film of the present invention includes: (1) mixing and supply of a raw material; (2) melt extrusion; (3) unstretched sheet casting step; (4) transverse stretching step; and (5) final heat treatment step.

Among these, in order to obtain a film having characteristics according to the present invention, it is important to mix a raw material having a high amorphous property with a PET bottle recycled raw material, and to promote transesterification of polyester raw materials to decrease the crystallinity at an extrusion step. A specific method will be described below.

(1) Mixing and supply of raw material

A heat shrinkage film requires its raw material to contain an amorphous component in general. In the heat-shrinkable polyester film of the present invention, since PET bottle recycled raw material chips are used, chips of at least two or more kinds of raw materials including a PET bottle recycled raw material are necessarily used. A blending-type method is typically used and is also used in the present invention.

(2) Melt extrusion

For increasing an amorphous property, it is important to progress, while the PET bottle recycled raw material and a raw material having an amorphous property are melt-mixed in an extruder, transesterification thereof and obtain polyester in a random copolymerization state. The transesterification is influenced by a mixed state and a temperature of resin in the extruder, time, etc.

A melt extruder is mainly composed of a cylinder and a screw, and a twin-screw extruder having two screws is preferably used. This is because rotation by the two screws promotes distribution and mixing of melted resin and increases the interface area between the resins having different components, to efficiently perform transesterification. When a single-screw extruder is used, the distribution and mixing capability is low. Thus, in order to promote transesterification, methods such as increasing the temperature of resin and prolonging a residence time in the extruder are required. However, increasing the temperature or prolonging the residence time also promotes thermal decomposition of the resin, causes a problem of decreasing a limiting viscosity (decreasing a molecular weight), and thus is not preferable.

As a multi-screw extruder, there are one having screws that rotate in the same direction and one having screws that rotate in different directions, but the multi-screw extruder having screws that rotate in the same direction is preferably used. This is also because the distribution and mixing capability is increased as in the above.

The screw having two or three threads is preferably used. Shearing is low with a single thread screw and transesterification is not promoted, so that the single threaded screw is not preferable. A triple thread screw is preferable from the viewpoint of promoting transesterification but has a low capability of conveying resin, and thus, may become a bottleneck for film formation that is being speeded up. Accordingly, a double thread screw is most preferably used.

In a melt mixing part near the center of the extruder, a kneading disk is preferably used as a screw element. Examples of the kneading disk type include a kneading disk type having a feeding capability (forward feeding), a kneading disk type having a returning capability (backward feeding), and a kneading disk type not having feeding capability (neutral), and these kneading disk types are more preferably used in combination.

The residence time of resin inside the extruder is determined according to the shape of a screw, the number of revolutions of the screw, and the like, but is preferably 60 seconds or longer and 300 seconds or shorter. If the residence time is shorter than 60 seconds, transesterification does not sufficiently progress and it is impossible to decrease crystallinity, so that such a residence time is not preferable. If the residence time is longer than 300 seconds, decomposition of resin progresses and a limiting viscosity decreases, so that such a residence time is not preferable. The residence time is more preferably 80 seconds or longer and 280 seconds or shorter and even more preferably 100 seconds or longer and 260 seconds or shorter.

The ratio (Q/N) of a discharge quantity of the extruder to the number of revolutions of the screw is expressed by a formula (2), is referred to as a filling ratio, and is preferably 1.0 or larger and 5.0 or smaller. Q represents the discharge quantity (kg/h), and N represents the number of revolutions (rpm) of the screw. If the filling ratio is larger than 5.0, the resins are not sufficiently mixed, and thus transesterification is not promoted and crystallinity cannot be decreased. If the filling ratio is smaller than 1.0, the resin is easily deteriorated and this causes decrease of the limiting viscosity or foreign matter, so that such a filling ratio is not preferable. The filling ratio is more preferably 1.2 or larger and 4.8 or smaller and even more preferably 1.4 or larger and 4.6 or smaller.

$$\text{Filling ratio} = \text{discharge quantity (kg/h)} / \text{number of revolutions (rpm) of screw} \cdots \text{formula (2)}$$

An extruder is divided into a feed part, the melt mixing part, and an extrusion part, from a raw material supply side. The cylinder temperature in each part is as follows. The cylinder temperature in the feed part is preferably 200°C or higher and 270°C or lower. A part of resin (specifically, a PET bottle recycled raw material) does not melt well at a temperature of lower than 200°C, which is not preferable. A material (specifically, a raw material having a high amorphous property) is easily entangled around a screw at a temperature of higher than 270°C, which is not preferable. Such cylinder temperature is more preferably 210°C or higher and 260°C or lower. The cylinder temperature in the melt mixing part is preferably 260°C or higher and 330°C or lower. A transesterification reaction is not promoted at a temperature of lower than 260°C, which is not preferable. Decomposition of the resin progresses and a limiting viscosity decreases at a temperature of higher than 330°C, which is not preferable. Such cylinder temperature is more preferably 270°C or higher and 310°C or lower. The cylinder temperature in the extrusion part is preferably 230°C or higher and 300°C or lower. At a temperature of lower than 230°C, a melt viscosity becomes excessively high, and thus, a resin pressure becomes high and failure of a succeeding pipe or foreign matter filter is caused, which is not preferable. The melt viscosity decreases and malfunction such as pulsation is caused during succeeding extrusion from a die, at a temperature of higher than 300, which is not preferable. Such cylinder temperature is more preferably 240°C or higher and 290°C or lower.

A gear pump is preferably provided following the extruder to adjust a supply amount and ensure supply stability.

The extruder may be a multi-screw extruder having two or more screws. Specifically, a four-screw extruder, an eight-screw extruder, a 16-screw extruder, and the like can be suitably used.

(3) Unstretched sheet casting step

An unstretched sheet is produced by being extruded so as to have a sheet-like shape by a known method such as a T-die method or tubular method. Then, the sheet that has been melt-extruded by the extruder is rapidly cooled to obtain an unstretched film. As a method for rapidly cooling the melted resin, a method for obtaining a substantially unoriented resin sheet, by casting the melted resin through a die on a rotating drum and rapidly cooling and solidifying the melted resin having been cast, can be suitably used.

(4) Transverse stretching step

A film is preferably stretched by transverse uniaxial stretching in which a film is stretched only in the width direction thereof. A method in which longitudinal stretching is performed in a step preceding the transverse stretching can be used, but a production machine becomes elongated, so that such a method is not preferable. The unstretched sheet obtained as above is introduced into a tenter device in which the sheet can be held at both ends thereof by clips and heated, and the film is heated by hot air to a predetermined temperature, and then is stretched by increasing a distance between the clips while being conveyed in the longitudinal direction. The temperature of the film at the time of stretching in the width direction is preferably film Tg + 5°C or higher and film Tg + 40°C or lower. A stretching force becomes excessively high and thus the risk of breakage is increased at a film temperature of lower than Tg + 5°C, which is not preferable. The stretching force is excessively low and thus sufficient shrinkability cannot be imparted to the film, at a film temperature of higher than Tg + 40°C, which is not preferable. A stretching ratio is preferably 3 times or more and 7 times or smaller. A necessary shrinkage rate cannot be obtained or large stretch unevenness occurs, at a stretching ratio of smaller than 3 times, which is not preferable. The risk of breakage is increased, at a stretching ratio of 7 times or more, which is not preferable. The stretching ratio is more preferably 3.5 times or more and 6.5 times or smaller, and even more preferably 4 times or more and 6 times or smaller.

(3) Final heat treatment step

The film after the transverse stretching is preferably subjected to final heat treatment at a temperature of a transverse stretch temperature + 5°C or higher and the transverse stretch temperature + 45°C or lower for 5 seconds or longer and 10 seconds or shorter in a state in which both the ends of the film in the width direction are held by clips in the tenter.

At a temperature higher than the transverse stretch temperature + 45°C, a shrinkage rate in the width direction decreases and necessary shrinkage characteristics cannot be obtained, which is not preferable. At a temperature lower than the transverse stretch temperature + 5°C, the shrinkage (so-called natural shrinkage rate) in the width direction becomes large with elapse of time when a final product is stored at an ordinary temperature, which is not preferable.

EXAMPLES

Next, the present invention will be specifically described using examples and comparative examples. However, the present invention is by no means limited to aspects of such examples, and modifications may be made as appropriate without departing from the gist of the present invention.

[Heat shrinkage rate in main shrinkage direction]

A film was cut into a 10 cm × 10 cm square and was treated in hot water at a hot water temperature of 98°C ± 0.5°C for 10 seconds in an unloaded state to be heat-shrunk, and then the dimensions in the longitudinal direction and the width direction (main shrinkage direction) of the film were measured and a heat shrinkage rate was obtained according to the following formula (1).

$$\text{Heat shrinkage rate} = ((\text{length before shrinkage} - \text{length after shrinkage}) / \text{length before shrinkage}) \times 100\ (\%)\qquad \text{formula (1)}$$

[Shrinkage stress]

A sample having a length of 200 mm in the main shrinkage direction and a width of 20 mm was cut out from a heat-shrinkable polyester film, and was measured by using a heating-oven-equipped strength and elongation measuring instrument (TENSILON (registered trademark of ORIENTEC Co., LTD.) manufactured by Toyo Baldwin (current name: ORIENTEC Co., LTD.)). The heating oven was heated to 90°C in advance, and the distance between chucks was set to 100 mm. Blowing of the heating oven was temporarily stopped, the heating oven door was opened, the sample was attached to the chucks, and then the heating oven door was immediately closed to resume the blowing. The shrinkage stress was measured for 30 seconds or longer, the shrinkage stress (MPa) after 30 seconds was obtained, and the maximum value during the measurement was regarded as the maximum shrinkage stress (MPa).

[Solvent adhesion strength]

Sealing was performed by applying 1,3-dioxolane to heat-shrinkable polyester films in an application amount of $5\pm0.3$ g/m$^2$ over an application width of $5\pm1$ mm and bonding the two films to each other. Thereafter, the obtained product was cut out so as to have a width of 15 mm in a direction orthogonal to a seal direction, was set in a universal tension tester STM-50 manufactured by Baldwin Corporation with a chuck space of 20 mm, and was pulled and peeled under the condition of a tensile speed of 200 mm/min., and T- peel (90° peel) was performed to measure a peeling resistance. The strength at that time was regarded as a solvent adhesion strength.

[Tg (glass transition point)]

5 mg of an unstretched film was placed in a sample pan, the pan lid was closed, the temperature was increased from -40°C to 300°C at a temperature increase rate of 10°C/min. in a nitrogen gas atmosphere, and measurement was performed, by using a differential scanning calorimeter (DSC250 manufactured by TA Instruments). Tg (°C) was obtained on the basis of JIS-K7121-1987.

[Fusion enthalpy]

5 mg of a film after film formation was placed in a sample pan, the pan lid was closed, and the temperature was increased to 300°C at a temperature increase rate of 10°C/min. in a nitrogen gas atmosphere, by using a differential scanning calorimeter, and was maintained at 300°C for 2 minutes after the temperature was increased. Then, the sample pan was taken out, and was rapidly cooled with liquid nitrogen. The rapidly cooled sample was returned to an ordinary temperature, the temperature was again increased from 30°C to 300°C at a temperature increase rate of 10°C/min., and DSC measurement was performed, by using the differential scanning calorimeter. A fusion enthalpy was determined from an area at an endothermic peak at which the sample melted. When two melting peaks were found, the fusion enthalpy was determined by adding and integrating the two melting peaks. When no melting peak was found, the fusion enthalpy was regarded to be 0.

[Change amount of specific heat capacity]

As described above, measurement was performed from 30°C to 300°C on the melted and rapidly cooled sample at a temperature increase rate of 2°C/min and at a modulation cycle of 40 Hz in a temperature-modulated mode, by using a differential scanning calorimeter, and a DSC curve in reversing heat flow was obtained. A difference obtained between specific heat capacity values before and after Tg in the reversing heat flow was regarded as a specific heat capacity difference $\Delta$Cp. When two Tgs were found, $\Delta$Cp was determined between the start of glass transition on a low-temperature side and the end of glass transition on a high-temperature side.

[Limiting viscosity (IV)]

0.2 g of polyester was dissolved in 50 ml of a mixture solvent of phenol/1,1,2,2-tetrachloroethane (60/40 (weight ratio)), and measurement was performed by using an Ostwald viscometer at a temperature of 30°C. The unit is dl/g.

[Composition analysis]

Each sample was dissolved in a solvent obtained by mixing chloroform D (manufactured by Eurisotop) and trifluoroacetic acid DI (manufactured by Eurisotop) at a ratio of 10:1 (by volume), to prepare a sample solution. Proton NMR of the sample solution was measured using NMR "GEMINI-200" (manufactured by Varian Medical Systems, Inc.) under the measurement conditions of a temperature of 23°C and 64 integration times. In the NMR measurement, the peak intensities of predetermined protons were calculated, and the amounts of components in 100 mol% of a diacid component and amounts of components in 100 mol% of a diol component were measured.

[Tensile test]

According to JIS-K-7127, a test piece was sampled so as to have a rectangular shape having a length of 50 mm in a film longitudinal direction $\times$ a length of 20 mm in a main shrinkage direction (film width direction), both ends (both ends in the longitudinal direction) of the test piece were gripped, a tensile test was performed under the condition of a tensile speed of 200 mm/min, with a universal tension tester (AUTOGRAPH (registered trademark) manufactured by SHIMADZU CORPORATION), and an elongation at the time of break was regarded as an elongation at break.

[Evaluation of shrinkage finish property]

Both end portions of the film were adhered with dioxolane to form a cylindrical label (a circumferential direction which was the main shrinkage direction of a heat-shrinkable film), and the label was cut. A diameter in a shrinkage direction of the label was 70 mm. Thereafter, the label was heat-shrunk at a zone temperature of 90°C for 4 seconds of passing time and was attached onto a 500 ml PET bottle (body diameter: 62 mm, minimum diameter of a neck portion: 25 mm), by using a steam tunnel (model: SH-1500-L) manufactured by Fuji Astec Inc. In the attachment, adjustment was performed such that, on the neck portion, a portion having a diameter of 30 mm was located at one end of the label. Finish properties after shrinkage were visually evaluated, and the criteria were as follows.

> 4: good finish property
> 3: a few defects (1 to 2)
> 2: some defects (3 to 5)
> 1: many defects (6 or more)

Here, defects mean wrinkles, folding of a label end portion, shrinkage unevenness, insufficient shrinkage, and peeling of an adhesion portion, and in the evaluation result thereof, 4 or higher was regarded as an acceptable level and 3 or lower was regarded as defective.

<PET bottle recycled raw material (polyester A)>

A polyester A was a PET bottle recycled raw material, and recycled raw material chips manufactured by Utsumi Recycle Systems Inc. was used. The amount of isophthalic acid contained with respect to the entire dicarboxylic acid component forming the polyester was 2 mol%.
The limiting viscosity was 0.60 dl/g.

<Preparation of amorphous polyester raw material (polyester B) chips>

In a stainless steel autoclave equipped with an agitator, a thermometer, and a partial circulation type cooler, 100 mol% of dimethyl terephthalate (DMT) as a dicarboxylic acid component, 63 mol% of ethylene glycol (EG) as a polyhydric alcohol component, 26 mol% of neopentyl glycol (NPG), and 11 mol% of diethylene glycol were put such that the molar ratio of polyhydric alcohol to dimethyl terephthalate was 2.2 times. Zinc acetate was added as a transesterification catalyst at a ratio of 0.05 mol% (to acid component), antimony trioxide was added as a polycondensation catalyst at a ratio of 0.225 mol% (to acid component), and a transesterification reaction was carried out while methanol produced was being evaporated out of the system. Then, a polycondensation reaction was carried out at 280°C under a reduced-pressure condition of 26.7 Pa, to obtain a polyester B having a limiting viscosity of 0.77 dl/g.

<Preparation of amorphous polyester raw material (polyester C) chips>

Preparation was performed by the same method as that for the polyester B except that 85 mol% of ethylene glycol (EG), 10 mol% of neopentyl glycol (NPG), and 5 mol% of diethylene glycol were used.

The limiting viscosity was 0.76 dl/g.

<Preparation of amorphous polyester raw material (polyester C) chips>

Preparation was performed by the same method as that for the polyester B except that 90 mol% of ethylene glycol (EG), 7 mol% of neopentyl glycol (NPG), and 3 mol% of diethylene glycol were used.
The limiting viscosity was 0.76 dl/g.

[Table 1]

| | Composition ( mol%) | | | | | Limiting viscosity dl/g |
|---|---|---|---|---|---|---|
| | Dicarboxylic acid | | Glycol | | | |
| | TPA | IPA | EG | NPG | DEG | |
| Polyester A | 98 | 2 | 100 | 0 | 0 | 0.6 |
| Polyester B | 100 | 0 | 63 | 26 | 11 | 0.77 |
| Polyester C | 100 | 0 | 85 | 10 | 5 | 0.76 |
| Polyester D | 100 | 0 | 90 | 7 | 3 | 0.76 |
| TPA: terephthalic acid<br>IPA: isophthalic acid<br>EG: ethylene glycol<br>NPG: neopentyl glycol<br>DEG: diethylene glycol | | | | | | |

<Discharge quantity of extruder>

Regarding a discharge quantity of the extruder, the weight of resin obtained by operating an extruder for one hour under a predetermined condition was measured as a discharge quantity (kg/h).

<Residence time in extruder>

A residence time was measured by using a white chip (polyethylene terephthalate containing titanium oxide). While polyester resin was being continuously extruded, a small amount (1 kg) of the white chip was put into an extruder through a supply port. The unstretched sheet that was obtained by extrusion was collected every 10 seconds, and a color L value at the center of the sheet was measured. The time when the white chip was put was set to 0, and the color L value was plotted against the time when the unstretched sheet was collected. Since the residence time was distributed, the time when the L value was maximum was set to be a residence time. The color was measured by using a color difference meter ZE6000 manufactured by NIPPON DENSHOKU INDUSTRIES CO., LTD.

<Method for producing heat-shrinkable polyester film>

[Example 1]

The polyester A raw material and the polyester B raw material as described above were mixed and put into a hopper disposed right above an extruder and supplied to the extruder. At this time, the mixing ratio of the raw materials was polyester A:polyester B = 15:85.
As the extruder, a twin-screw extruder was used. The screw had a kneading disk, and a double thread screw was used. The number of revolutions of the screw was set to 200 rpm. In addition, in the extruder, a cylinder temperature of the feed part was set to 210°C, the cylinder temperature of the melt mixing part was set to 300°C, and the cylinder temperature of the extrusion part was set to 260°C. A gear pump was installed following the extruder, and a discharge quantity was adjusted so as to be 420 kg/h. The residence time of resin was 270 seconds when the resin was extruded under the above condition. The filling ratio was 2.1.
The resin was extruded from the extruder through a T-die and then was rapidly cooled, to obtain an unstretched film having a thickness of 120 μm. At this time, a glass transition temperature of the unstretched film was 66°C.
This unstretched film was introduced into a tenter, preheating was performed until the film temperature became 76°C, and then a distance between clips was widened such that the film was stretched 4.0 times in the width direction at a film temperature of 76°C. Furthermore, the film was introduced to a final heat treatment zone and was heat-treated at a film temperature of 83°C. The thickness of the film after the stretching was 30 $\mu$m. The film was continuously wound with a paper tube, to obtain a film roll.

The production method and the evaluation result of the film are shown in Table 2.

As a result of the evaluation, mixing with the amorphous raw material and promoting transesterification during melt extrusion allowed the film to have a high amorphous property, and the film had sufficient shrinkability in the width direction, a low shrinkage stress, and a high solvent adhesion strength, and thus, had a favorable shrinkage finish property.

[Example 2]

The same procedure as in Example 1 was carried out except that a gear pump was adjusted such that a discharge quantity was 473 kg/h so that the thickness of the unstretched film was 135 $\mu$m, and the stretching ratio in the tenter was changed to 4.5 times.

The production method and the evaluation result of the film are shown in Table 2.

As a result of the evaluation, mixing with the amorphous raw material and promoting transesterification during melt extrusion allowed the film to have a high amorphous property, and the film had sufficient shrinkability in the width direction, a low shrinkage stress, and a high solvent adhesion strength, and thus, had a favorable shrinkage finish property.

[Example 3]

The same procedure as in Example 1 was carried out except that a gear pump was adjusted such that a discharge quantity was 525 kg/h so that the thickness of the unstretched film was 150 $\mu$m, and the stretching ratio in the tenter was changed to 5.0 times.

The production method and the evaluation result of the film are shown in Table 2.

As a result of the evaluation, mixing with the amorphous raw material and promoting transesterification during melt extrusion allowed the film to have a high amorphous property, and the film had sufficient shrinkability in the width direction, a low shrinkage stress, and a high solvent adhesion strength, and thus, had a favorable shrinkage finish property.

[Example 4]

The polyester A and the polyester C were used as raw materials, and the mixing ratio of polyester A:polyester C was set to 15:85. Tg of the unstretched film was 71°C. The film temperature in the tenter stretching was set to 81°C, and the final heat treatment temperature was set to 88°C. The same procedure as in Example 2 was carried out except for the above.

The production method and the evaluation result of the film are shown in Table 2.

As a result of the evaluation, mixing with the amorphous raw material and promoting transesterification during melt extrusion allowed the film to have a high amorphous property, and the film had sufficient shrinkability in the width direction, a low shrinkage stress, and a high solvent adhesion strength, and thus, had a favorable shrinkage finish property.

[Example 5]

The mixing ratio of polyester A:polyester B was set to 25:75. Tg of the unstretched film was 67°C. The film temperature in the tenter stretching was set to 77°C, and the final heat treatment temperature was set to 84°C. The same procedure as in Example 2 was carried out except for the above. The same procedure as in Example 2 was carried out except for the above.

The production method and the evaluation result of the film are shown in Table 2.

As a result of the evaluation, mixing with the amorphous raw material and promoting transesterification during melt extrusion allowed the film to have a high amorphous property, and the film had sufficient shrinkability in the width direction, a low shrinkage stress, and a high solvent adhesion strength, and thus, had a favorable shrinkage finish property.

[Example 6]

The mixing ratio of the polyester A and the polyester C was set to polyester A:polyester B was set to 25:75. The same procedure as in Example 4 was carried out except for the above.

The production method and the evaluation result of the film are shown in Table 2.

As a result of the evaluation, mixing with the amorphous raw material and promoting transesterification during melt extrusion allowed the film to have a high amorphous property, and the film had sufficient shrinkability in the width direction, a low shrinkage stress, and a high solvent adhesion strength, and thus, had a favorable shrinkage finish property.

[Example 7]

The mixing ratio of the polyester A and the polyester B was set to polyester A:polyester B was set to 40:60. Tg of the unstretched film was 68°C. The film temperature in the tenter stretching was set to 78°C, and the final heat treatment temperature was set to 85°C. The same procedure as in Example 2 was carried out except for the above.
The production method and the evaluation result of the film are shown in Table 2.
As a result of the evaluation, mixing with the amorphous raw material and promoting transesterification during melt extrusion allowed the film to have a high amorphous property, and the film had sufficient shrinkability in the width direction, a low shrinkage stress, and a high solvent adhesion strength, and thus, had a favorable shrinkage finish property.

[Example 8]

The mixing ratio of the polyester A and the polyester C was set to polyester A:polyester B was set to 40:60. Tg of the unstretched film was 72°C. The film temperature in the tenter stretching was set to 82°C, and the final heat treatment temperature was set to 89°C. The same procedure as in Example 4 was carried out except for the above. The same procedure as in Example 2 was carried out except for the above.
The production method and the evaluation result of the film are shown in Table 2.
As a result of the evaluation, mixing with the amorphous raw material and promoting transesterification during melt extrusion allowed the film to have a high amorphous property, and the film had sufficient shrinkability in the width direction, a low shrinkage stress, and a high solvent adhesion strength, and thus, had a favorable shrinkage finish property.

[Example 9]

The mixing ratio of the polyester A and the polyester C was set to polyester A:polyester B was set to 45:55. The same procedure as in Example 8 was carried out except for the above.
The production method and the evaluation result of the film are shown in Table 2.
As a result of the evaluation, mixing with the amorphous raw material and promoting transesterification during melt extrusion allowed the film to have a high amorphous property, and the film had sufficient shrinkability in the width direction, a low shrinkage stress, and a high solvent adhesion strength, and thus, had a favorable shrinkage finish property.

[Comparative Example 1]

The mixing ratio of the polyester A and the polyester C was set to polyester A:polyester B = 55:45. Tg of an unstretched film was at 73°C. The film temperature in the tenter stretching was set to 83°C, and the final heat treatment temperature was set to 90°C. The same procedure as in Example 9 was carried out except for the above.
The production method and the evaluation result of the film are shown in Table 2.
As a result of the evaluation, an addition amount of an amorphous raw material was small with respect to the amount of the PET bottle recycled raw material, and thus the crystallinity was high, a sufficient shrinkage rate could not be obtained, the solvent adhesion strength was low, and the shrinkage finish property was poor.

[Comparative Example 2]

The same procedure as in Comparative Example 1 was carried out except that a gear pump was adjusted such that a discharge quantity was 525 kg/h so that the thickness of the unstretched film was 150 μm, and the stretching ratio in the tenter was changed to 5.0 times.
The production method and the evaluation result of the film are shown in Table 2.
As a result of the evaluation, an addition amount of an amorphous raw material was small with respect to the amount of the PET bottle recycled raw material, and thus the crystallinity was high, a sufficient shrinkage rate could not be obtained, a high shrinkage stress, the solvent adhesion strength was low, and the shrinkage finish property was poor.

[Example 10]

The same procedure as in Example 9 was carried out except that the mixing ratio of the polyester A and the polyester D was set to polyester A:polyester D was set to 25:75.
The production method and the evaluation result of the film are shown in Table 2.
As a result of the evaluation, mixing with the amorphous raw material and promoting transesterification during melt extrusion allowed the film to have a high amorphous property, and the film had sufficient shrinkability in the width direction, a low shrinkage stress, and a high solvent adhesion strength, and thus, had a favorable shrinkage finish property.

[Comparative Example 3]

The same procedure as in Example 9 was carried out except that the screw of the twin-screw extruder was changed and adjusted such that the number of revolutions of the screw was 80 rpm and a discharge quantity was 420 kg. At this time, the filling ratio was 5.3. A residence time of resin in the extruder was 40 seconds.

The production method and the evaluation result of the film are shown in Table 2.

As a result of the evaluation, transesterification in the extruder was insufficient, and thus crystallinity was high for the entire film, a sufficient shrinkage rate could not be obtained, the solvent adhesion strength was low, and the shrinkage finish property was poor.

[Comparative Example 4]

The same procedure as in Example 9 was carried out except that the extruder was changed to a single -screw extruder and adjusted such that the number of revolutions of the screw was 70 rpm and a discharge quantity was 420 kg. At this time, the filling ratio was 6.0. A residence time of resin in the extruder was 50 seconds.

The production method and the evaluation result of the film are shown in Table 2.

As a result of the evaluation, transesterification in the extruder was insufficient, and thus crystallinity was high for the entire film, a sufficient shrinkage rate could not be obtained, the solvent adhesion strength was low, and the shrinkage finish property was poor.

[Comparative Example 5]

The same procedure as in Example 9 was carried out except that the cylinder temperature of the feed part was set to 240°C, the cylinder temperature of the melt mixing part was set to 350°C, and the cylinder temperature of the extrusion part was set to 280°C in the extruder.

The production method and the evaluation result of the film are shown in Table 2.

As a result of the evaluation, the amorphous property of the entire film was high, a sufficient shrinkage rate was obtained, the shrinkage stress was low, and the solvent adhesion strength was sufficient, but the limiting viscosity was low, and the tensile elongation at break in the longitudinal direction was low, and thus trouble with breakage was likely to occur in a succeeding processing step.

[Table 2A]

| | | | | Ex 1 | Ex 2 | Ex 3 | Ex 4 | Ex 5 | Ex 6 | Ex 7 | Ex 8 |
|---|---|---|---|---|---|---|---|---|---|---|---|
| Production condition | Raw material | Mixing ratio (%by mass) | Polyester A | 15 | 15 | 15 | 15 | 25 | 25 | 40 | 40 |
| | | | Polyester B | 85 | 85 | 85 | 0 | 75 | 0 | 60 | 0 |
| | | | Polyester C | 0 | 0 | 0 | 85 | 0 | 75 | 0 | 60 |
| | | | Polyester D | 0 | 0 | 0 | 0 | 0 | 0 | 0 | 0 |
| | | Film raw material composition | Dicarboxylic acid component — Terephthalic acid | 99.7 | 99.7 | 99.7 | 99.7 | 99.5 | 99.5 | 99.2 | 99.2 |
| | | | Isophthalic acid | 0.3 | 0.3 | 0.3 | 0.3 | 0.5 | 0.5 | 0.8 | 0.8 |
| | | | Diol component — Ethylene glycol | 69.0 | 69.0 | 69.0 | 87.3 | 76.8 | 88.8 | 77.8 | 91.0 |
| | | | Neopentyl glycol | 22.0 | 22.0 | 22.0 | 8.5 | 19.5 | 7.5 | 15.6 | 6.0 |
| | | | Diethylene glycol | 9.0 | 9.0 | 9.0 | 4.3 | 3.8 | 3.8 | 6.6 | 3.0 |
| | Extrusion | Extruder | Number of screws | Two screws | Two screws | Two screws | Two screws | Two screws | Two screws | Two screws | Two screws |
| | | | Number of sets of screw threads | Two threads | Two threads | Two threads | Two threads | Two threads | Two threads | Two threads | Two threads |
| | | | Discharge quantity (kg/h) | 420 | 473 | 525 | 473 | 473 | 473 | 473 | 473 |
| | | | Number of revolutions (rpm) of screw | 200 | 200 | 200 | 200 | 200 | 200 | 200 | 200 |
| | | | Filling ratio | 2.1 | 2.4 | 2.6 | 2.4 | 2.4 | 2.4 | 2.4 | 2.4 |
| | | | Cylinder temperature — Feed part | 210 | 210 | 210 | 210 | 215 | 215 | 225 | 235 |
| | | | Melt mixing part | 300 | 300 | 300 | 300 | 300 | 300 | 310 | 320 |
| | | | Extrusion part | 260 | 260 | 260 | 260 | 265 | 265 | 270 | 270 |
| | | | Extrusion residence time (min) | 270 | 240 | 220 | 230 | 230 | 230 | 230 | 230 |
| | | | Unstretched film thickness (μm) | 120 | 135 | 150 | 135 | 135 | 135 | 135 | 135 |
| | | | Unstretched film Tg (°C) | 66 | 66 | 66 | 71 | 67 | 71 | 68 | 72 |
| | Tenter | | Film temperature (°C) in transverse stretch | 76 | 76 | 76 | 81 | 77 | 81 | 78 | 82 |

(continued)

| | | | | Ex 1 | Ex. 2 | Ex 3 | Ex 4 | Ex 5 | Ex 6 | Ex 7 | Ex 8 |
|---|---|---|---|---|---|---|---|---|---|---|---|
| | Transverse stretching ratio | | | 4.0 | 4.5 | 5.0 | 4.5 | 4.5 | 4.5 | 4.5 | 4.5 |
| | Film temperature (°C) in final heat treatment | | | 83 | 83 | 83 | 88 | 84 | 88 | 85 | 89 |
| Film evaluation | Film thickness (μm) | | μm | 30 | 30 | 30 | 30 | 30 | 30 | 30 | 30 |
| | DSC | ΔHm | J/g | 0 | 0 | 0 | 20.6 | 4.2 | 23.2 | 5.5 | 25.6 |
| | | ΔCp | J/(g·°C) | 0.32 | 0.32 | 0.32 | 0.24 | 0.3 | 0.22 | 0.3 | 0.22 |
| | 98°C shrinkage rate | Longitudinal direction | % | -1 | -1 | -2 | 1 | 1 | 2 | 1 | 2 |
| | | Width direction | % | 70 | 72 | 78 | 67 | 70 | 61 | 69 | 58 |
| | 90°C shrinkage stress | | MPa | 9.8 | 11.1 | 12.2 | 11.6 | 10.8 | 10.2 | 10.2 | 12.6 |
| | Solvent adhesion strength | | N/15 mm | 8.2 | 8.1 | 8.1 | 5.2 | 6.9 | 5 | 6.2 | 4 |
| | Limiting viscosity | | dl/g | 0.68 | 0.68 | 0.68 | 0.66 | 0.69 | 0.68 | 0.66 | 0.67 |
| | Tensile elongation at break in longitudinal direction | | % | 720 | 610 | 541 | 580 | 607 | 577 | 611 | 499 |
| | Finish evaluation | | | 4 | 4 | 4 | 4 | 4 | 4 | 4 | 4 |

[Table 2B]

| | | | | Ex. 9 | Comp. Ex 1 | Comp. Ex. 2 | Ex. 10 | Comp. Ex. 3 | Comp. Ex. 4 | Comp. Ex. 5 |
|---|---|---|---|---|---|---|---|---|---|---|
| Production condition | Raw material | Mixing ratio (% by mass) | Polyester A | 45 | 55 | 55 | 20 | 45 | 45 | 45 |
| | | | Polyester B | 0 | 0 | 0 | 0 | 0 | 0 | 0 |
| | | | Polyester C | 55 | 45 | 45 | 0 | 55 | 55 | 55 |
| | | | Polyester D | 0 | 0 | 0 | 80 | 0 | 0 | 0 |
| | | Film raw material composition | Dicarboxylic acid component — Terephthalic acid | 99.1 | 98.9 | 98.9 | 99.6 | 99.1 | 99.1 | 99.1 |
| | | | Dicarboxylic acid component — Isophthalic acid | 0.9 | 1.1 | 1.1 | 0.4 | 0.9 | 0.9 | 0.9 |
| | | | Diol component — Ethylene glycol | 91.8 | 93.3 | 97.8 | 92.0 | 91.8 | 91.8 | 91.8 |
| | | | Diol component — Neopentyl glycol | 5.5 | 4.5 | 2.3 | 5.6 | 5.5 | 5.5 | 5.5 |
| | | | Diol component — Diethylene glycol | 2.8 | 2.3 | 0.0 | 2.4 | 2.8 | 2.8 | 2.8 |
| | Extrusion | Extruder | Number of screws | Two screws | Two screws | Two screws | Two screws | Two screws | One screw | Two screws |
| | | | Number of sets of screw threads | Two threads | Two threads | Two threads | Two threads | Two threads | Two threads | Two threads |
| | | | Discharge quantity (kg/h) | 473 | 473 | 525 | 473 | 420 | 420 | 473 |
| | | | Number of revolutions (rpm) of screw | 200 | 200 | 200 | 200 | 80 | 70 | 200 |
| | | | Filling ratio | 2.4 | 2.4 | 2.6 | 2.4 | 5.3 | 6.0 | 2.4 |
| | | Cylinder temperature | Feed part | 235 | 235 | 235 | 235 | 235 | 235 | 240 |
| | | | Melt mixing part | 320 | 320 | 320 | 300 | 300 | 300 | 350 |
| | | | Extrusion part | 270 | 270 | 270 | 270 | 270 | 270 | 280 |
| | | | Extrusion residence time (min) | 230 | 230 | 210 | 230 | 40 | 50 | 230 |
| | | | Unstretched film thickness (μm) | 135 | 135 | 150 | 135 | 135 | 135 | 135 |
| | | | Unstretched film Tg (°C) | 72 | 73 | 73 | 73 | 72 | 72 | 72 |

| | | | | Ex. 9 | Comp. Ex 1 | Comp. Ex. 2 | Ex. 10 | Comp. Ex. 3 | Comp. Ex. 4 | Comp. Ex. 5 |
|---|---|---|---|---|---|---|---|---|---|---|
| | Tenter | Filmtemperature (°C) in transverse stretch | | 82 | 83 | 83 | 83 | 82 | 82 | 82 |
| | | Transverse stretching ratio | | 4.5 | 4.5 | 5.0 | 4.5 | 4.5 | 4.5 | 4.5 |
| | | Film temperature (°C) in final heat treatment | | 89 | 90 | 90 | 90 | 89 | 89 | 89 |
| Film evaluation | Film thickness ($\mu$m) | | $\mu$m | 30 | 30 | 30 | 30 | 30 | 30 | 30 |
| | DSC | $\triangle$Hm | J/g | 27.8 | 33.4 | 33.4 | 31 | 35.2 | 40.2 | 25.2 |
| | | $\triangle$Cp | J/(g°C) | 0.21 | 0.15 | 0.15 | 0.17 | 0.13 | 0.11 | 0.22 |
| | 98°C shrinkage rate | Longitudinal direction | % | 2 | 3 | 3 | 1 | 1 | 1 | 1 |
| | | Width direction | % | 53 | 44 | 42 | 50 | 42 | 41 | 59 |
| | 90°C shrinkage stress | | MPa | 13 | 14.2 | 16.8 | 14 | 14.2 | 18.2 | 12.5 |
| | Solvent adhesion strength | | N115 mm | 3.5 | 2.3 | 2.3 | 2.9 | 2.1 | 1.9 | 4.9 |
| | Limiting viscosity | | dl/g | 0.68 | 0.68 | 0.67 | 0.66 | 0.71 | 0.71 | 0.51 |
| | Tensile elongation at break in longitudinal direction | | % | 483 | 475 | 471 | 500 | 512 | 656 | 32 |
| | Finish evaluation | | | 4 | 3 | 1 | 4 | 3 | 1 | 4 |

INDUSTRIAL APPLICABILITY

As described above, the heat-shrinkable polyester film of the present invention contains a predetermined amount of a PET bottle recycled raw material, but has high shrinkability in the width direction, a low shrinkage stress, and a high solvent adhesion strength, and thus is excellent in the shrinkage finish property and can be suitably used for beverage bottle labels, etc. In addition, the heat-shrinkable polyester film contains the PET bottle recycled raw material, and thus can also contribute to reduction of environmental burden.

**Claims**

1. A heat-shrinkable polyester film, wherein
   a polyester of the polyester film contains 5 mass% or more and 50 mass% or less of recycled raw material from a PET bottle and an acid component of the polyester comprises isophthalic acid, and the film satisfies the following requirements (1) to (5):

   (1) a shrinkage rate in a main shrinkage direction of the film is 50% or higher when the film is immersed in 98°C hot water for 10 seconds;
   (2) a maximum shrinkage stress in the main shrinkage direction of the film is 3 MPa or higher and 15 MPa or lower when measured in 90°C hot air;
   (3) a melting heat amount $\Delta$Hm of a sample obtained by once melting and then rapidly cooling the film as measured by using a differential scanning calorimeter (DSC) is 0 J/g or more and 32 J/g or smaller;
   (4) a solvent adhesion strength of the film is 2.9 N/15 mm or higher when 1,3-dioxolane is used as an adhesive solvent; and
   (5) a limiting viscosity of the film is 0.59 dl/g or more and 0.75 dl/g or smaller.

2. The heat-shrinkable polyester film according to claim 1, wherein
   the film has a change amount $\Delta$Cp between specific heat capacities before and after a glass transition is 0.20 J/(g·°C) or more and 0.35 J/(g·°C) or smaller when a reversing heat flow measurement with a temperature-modulated DSC is performed on a sample obtained by once melting and then rapidly cooling the film.

3. The heat-shrinkable polyester film according to claim 1 or 2, wherein
   the film has a tensile elongation at break in a direction orthogonal to the main shrinkage direction of the heat-shrinkable polyester film of 40% or higher.

4. The heat-shrinkable polyester film according to any one of claims 1 to 3, wherein
   a content ratio of the isophthalic acid in 100 mol% of the entire acid component in polyester forming the film is 0.1 mol% or more and 3.0 mol% or smaller.

5. The heat-shrinkable polyester film according to any one of claims 1 to 4, wherein
   the polyester forming the heat-shrinkable polyester film comprises ethylene terephthalate as a main constituent component.

6. A heat-shrinkable label, comprising the heat-shrinkable polyester film according to any one of claims 1 to 5.

7. A package, wherein at least a part of an outer periphery of an object to be packaged is covered by the heat-shrinking the label according to claim 6.

## INTERNATIONAL SEARCH REPORT

| International application No. |
| --- |
| **PCT/JP2022/006370** |

### A. CLASSIFICATION OF SUBJECT MATTER

*C08J 5/18*(2006.01)i
FI: C08J5/18 CFD

According to International Patent Classification (IPC) or to both national classification and IPC

### B. FIELDS SEARCHED

Minimum documentation searched (classification system followed by classification symbols)

C08J5/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-73637 A (TOYOBO CO., LTD.) 14 May 2020 (2020-05-14)<br>claims, examples | 1-7 |
| A | JP 2015-199909 A (TOYOBO CO., LTD.) 12 November 2015 (2015-11-12)<br>claims, examples | 1-7 |
| A | WO 2017/018345 A1 (TOYOBO CO., LTD.) 02 February 2017 (2017-02-02)<br>claims, examples | 1-7 |
| A | JP 2009-161625 A (TOYO BOSEKI) 23 July 2009 (2009-07-23)<br>claims, examples | 1-7 |
| A | JP 2007-2008 A (TOYO BOSEKI) 11 January 2007 (2007-01-11)<br>claims, examples | 1-7 |
| A | JP 2012-166547 A (FUJIFILM CORP) 06 September 2012 (2012-09-06)<br>claims, examples | 1-7 |

☐ Further documents are listed in the continuation of Box C.  ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **05 April 2022** | **19 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/006370**

| Patent document cited in search report | | | Publication date (day/month/year) | Patent family member(s) | | | Publication date (day/month/year) |
|---|---|---|---|---|---|---|---|
| JP | 2020-73637 | A | 14 May 2020 | US 2018/0229422 A1 claims, examples WO 2017/022703 A1 EP 3333215 A1 | | | |
| JP | 2015-199909 | A | 12 November 2015 | (Family: none) | | | |
| WO | 2017/018345 | A1 | 02 February 2017 | US 2018/0208375 A1 claims, examples CN 107848194 A KR 10-2018-0031681 A | | | |
| JP | 2009-161625 | A | 23 July 2009 | (Family: none) | | | |
| JP | 2007-2008 | A | 11 January 2007 | US 2009/0042024 A1 claims, examples WO 2006/109662 A1 EP 1876019 A1 CN 101155689 A KR 10-2007-0118699 A | | | |
| JP | 2012-166547 | A | 06 September 2012 | WO 2012/102238 A1 | | | |

Form PCT/ISA/210 (patent family annex) (January 2015)

**REFERENCES CITED IN THE DESCRIPTION**

**Patent documents cited in the description**

• JP 5320737 B